# EUROPÄISCHE PATENTSCHRIFT

(11) **EP 3 437 174 B1**
(45) Veröffentlichungstag und Bekanntmachung des Hinweises auf die Patenterteilung: **15.07.2020**
(21) Anmeldenummer: 17724045.4
(22) Anmeldetag: 18.05.2017
(51) Int. Cl.: H02K 11/33, G10K 11/175, B63H 23/24, H02P 6/10

(54) **VERFAHREN ZUM BETRIEB EINER ELEKTRISCHEN MASCHINE**
METHOD FOR OPERATING AN ELECTRICAL MACHINE
PROCÉDÉ PERMETTANT DE FAIRE FONCTIONNER UN MOTEUR ÉLECTRIQUE

(30) Priorität: 01.06.2016 DE 102016209602; 01.06.2016 DE 102016209606
(43) Veröffentlichungstag der Anmeldung: 06.02.2019
(73) Patentinhaber: Siemens Aktiengesellschaft, 80333 München (DE)
(72) Erfinder: MEYER, Christian, 13591 Berlin (DE); WILCKE, Ralf, 13351 Berlin (DE)
(86) Internationale Anmeldenummer: PCT/EP2017/061908
(87) Internationale Veröffentlichungsnummer: WO 2017/207283

(56) Entgegenhaltungen:
- DE-A1- 10 301 272
- DE-A1-102010 043 973
- JP-A- 2008 236 923
- US-A1- 2005 125 114

## Beschreibung

Die Erfindung betrifft ein Verfahren zum geräuschoptimierten Betrieb einer elektrischen Maschine, die insbesondere zum Antrieb von Fahrzeugen, insbesondere von U-Booten, vorgesehen ist, umfassend einen Stator, der mehrere Spulen aufweist, sowie mehrere Umrichter zur Stromeinspeisung der Spulen. Die Erfindung betrifft weiterhin eine elektrische Maschine, die insbesondere zum Antrieb von Fahrzeugen, insbesondere von U-Booten vorgesehen ist, umfassend einen Stator, der mehrere Spulen aufweist, sowie mehrere Umrichter zur Stromeinspeisung der Spulen. Die Erfindung betrifft schließlich ein Fahrzeug, insbesondere ein U-Boot, mit einer solchen elektrischen Maschine.

Eine elektrische Maschine für den Propulsionsantrieb eines U-Boots mit einer permanentmagnetisch erregten Synchronmaschine ist z.B. in der Offenlegungsschrift WO 2004/068694 A1 beschrieben. Dabei ist eine Ständerwicklung als Wellenwicklung ausgebildet und hat eine Vielzahl von Wicklungssträngen. Jeder Wicklungsstrang wird durch jeweils einen, nur für diesen Wicklungsstrang vorgesehenen Umrichter gespeist. Die Umrichter, die die Ständerwicklung speisen, sind im Inneren der permanentmagnetisch erregten Synchronmaschine in axialer Richtung in einem Umrichterhaltegerüst angeordnet und bilden Umrichtermodule.

Beim Betrieb der meisten Fahrzeuge ist es häufig das Ziel laute Geräusche zu dämpfen oder gar zu vermeiden. Dies ist beispielsweise der Fall bei einer so genannten Schleichfahrt eines U-Boots, bei der Anlagen auf dem U-Boot, deren Betrieb nicht unbedingt notwendig ist, abgeschaltet werden. Bei einer Schleichfahrt eines U-Boots sind selbst die Motorgeräusche möglichst zu dämpfen.

Die Offenlegungsschrift DE 10 2010 043973 A1 beschreibt Verfahren zur Erzeugung eines Geräusches eines durch einen Elektromotor angetriebenen Kraftfahrzeugs.

Die Offenlegungsschrift DE 103 01 272 A1 beschreibt eine elektrische Maschine für den Propulsionsantrieb eines U-Boots mit einer permanentmagnetisch erregten Synchronmaschine. Mit geringem Aufwand soll eine hohe Reduzierung der bei ihrem Betrieb entstehenden Geräusche erreicht werden und ein im Vergleich zum Stand der Technik erhöhtes Maß an Windungs- und Erdschlusssicherheit gewährleistet werden. Es wird vorgeschlagen, dass die Ständerwicklung als Wellenwicklung ausgebildet ist und eine Vielzahl Wicklungsstränge aufweist. Jeder Wicklungsstrang der Wellenwicklung ist durch einen separaten, einphasigen Umrichter gespeist. Die Umrichter in Form von Umrichtermodulen befinden sich im Inneren der Synchronmaschine.

Die Offenlegungsschrift US 2005/125114 A1 beschreibt ein aktives geräuschdämpfendes System für einen bürstenlosen Gleichstrommotor in einem U-Boot. Dabei werden die verschiedenen Phasen des Motors durch einen Umrichter asymmetrisch angesteuert um die Geräusche zu reduzieren.

Die Offenlegungsschrift JP 2008 236923 A beschreibt ein Verfahren zur Reduzierung von Wirbelströmen in einem permanenterregten Motor, welche durch Schwankungen der magnetischen Flussdichte des Motors hervorgerufen werden. Dabei wird der drehmomentbildende Strom durch einen invertierter Stromverlauf zu den Schwankungen der magnetischen Flussdichte überlagert.

Der Erfindung liegt die Aufgabe zugrunde, einen möglichst leisen Betrieb einer elektrischen Maschine zu gewährleisten bzw. ein Fahrzeug, insbesondere ein U-Boot, mit einer solchen leisen elektrischen Maschine zur Verfügung zu stellen.

Die Aufgabe wird erfindungsgemäß gelöst durch ein Verfahren nach Anspruch 1.

Die Aufgabe wird weiterhin erfindungsgemäß gelöst durch eine elektrische Maschine nach Anspruch 5.

Die Aufgabe wird schließlich erfindungsgemäß gelöst durch ein Fahrzeug, insbesondere U-Boot, mit einer solchen elektrischen Maschine.

DE 10 2010 043973 A1 offenbart die folgenden Merkmale des Anspruchs 1: Ein Verfahren zum Betrieb einer elektrischen Maschine, umfassend einen Stator, der mehrere Spulen aufweist, sowie mehrere Umrichter zur Stromeinspeisung der Spulen.

Die in Bezug auf das Verfahren nachstehend angeführten Vorteile und bevorzugten Ausgestaltungen lassen sich sinngemäß auf die elektrische Maschine und das Fahrzeug übertragen.

Die Erfindung basiert auf der Idee, durch eine Gegentaktung der zweiten Gruppe von Spulen eine aktive Geräuschkompensation zu generieren. Das Geräusch entsteht in der Regel in den Spulen, die von der ersten Gruppe von Umrichtern, die für den Betrieb der elektrischen Maschine zur Erzeugung eines elektrischen Drehmoments vorgesehen sind, mit dem ersten Strom bestromt werden. Um ein Drehfeld zu erzeugen, speisen die Umrichter der ersten Gruppe in die jeweiligen Spulen den ersten Strom mit einem jeweiligen Phasenversatz ein.

Die zweite Gruppe von Umrichtern stellt Umrichter dar, die für den Normalbetrieb oder ein Teillastbetrieb der elektrischen Maschine nicht erforderlich sind. Erfindungsgemäß werden diese Umrichter eingesetzt, um in die Spulen, die sie bestromen, Strom insbesondere mit dem gleichen Frequenzverlauf jedoch mit einem zur den Oberschwingungen des ersten Stroms modifizierten Stromverlauf einzuspeisen. Der modifizierte Stromverlauf stellt insbesondere zum Verlauf des ersten Stroms invertierten Strom dar.

Unter "modifiziertem Strom" wird hierbei verstanden, dass der zweite Strom auf Basis des ersten Stroms modifiziert wird, damit für einen gewünschten Zeitraum eine Gegentaktung z.B. durch eine Umkehrung des Stromsignals zu erzeugen. Die Amplitude der Gegentaktung ist nicht zwingend die gleiche wie die der Oberschwingungen der ersten Gruppe. Unter anderem kann der Verlauf des zweiten Stroms durch einen Faktor modifiziert sein, wobei der Faktor zeitlich variabel sein kann, d.h. die Modifikation erfolgt nicht durchgehend oder zu verschienden Zeitabschnitten liegt ein unterschiedlich modifizierter Stromverlauf vor. Ergänzend oder alternativ kann durch eine Änderung des Faktors die Amplitude des modifizierten zweiten Stroms ebenfalls zeitlich variiert werden.

Unter "Gruppe von Umrichtern" wird hierbei eine Anzahl von einem, zwei und mehreren Umrichtern verstanden, die gleich angesteuert werden. Eine räumliche Nähe der Umrichter innerhalb der Gruppe ist vorteilhaft, jedoch nicht zwingend erforderlich, d.h. die Gruppe ist nicht über die räumliche Verteilung der Umrichter, sondern über ihre Funktion definiert.

Die aktive Geräuschkompensation (engl. Active Noise Reduction (ANR) oder Active Noise Cancellation (ANC)) ist bekannt und findet industrielle Anwendung z.B. in aktiven Abgasschalldämpfern für Kraftfahrzeuge. Das Prinzip beruht auf der Erzeugung von Schall, um mittels destruktiver Interferenz einen störenden Schall auszulöschen. Dazu wird ein Signal erzeugt, das dem des störenden Schalls mit entgegengesetzter Polarität exakt entspricht. Bei den bekannten Produkten, die auf diesen Prinzip basieren und in elektrischen Motoren eingesetzt werden, werden zur Beruhigung der angeregten Motorstruktur an der Aufstellung Sensoren angebracht, die erst den Störschall aufnehmen und anschließend werden mittels Aktuatoren phasenversetzte Tilgungssignale aufgebracht. Somit lassen sich Erfolge unter 1 kHz erzielen, da darüber die synchrone Phasenverschiebung nicht schnell genug realisiert werden kann.

Im Gegensatz dazu ist gemäß der vorliegenden Erfindung die Taktung der im Eingriff der ersten Gruppe von Umrichtern befindlichen aktiven Spulen bekannt und die Stromparameter müssen daher nicht ermittelt werden. Hierdurch entfällt eine Rechenleistung und die Gegentaktung erfolgt präziser und schneller bereits an der Geräuschquelle.

Gemäß einer bevorzugten Ausgestaltung wird der zweite, in Bezug auf die Oberschwingungen des ersten Stroms modifizierte invertierte, Strom in einem Normalbetrieb oder einem Teillastbetrieb der elektrischen Maschine erzeugt, da nicht alle Umrichter für die Drehmomenterzeugung benötigt werden. Eine solche Geräuschkompensation ist insbesondere bei einer leisen Schleichfahrt eines U-Boots besonders vorteilhaft, da in diesem Fall nicht unbedingt die volle Leistung der elektrischen Maschine entscheidend ist, sondern das primäre Ziel ist es den Antrieb des U-Boots besonders geräuscharm zu betreiben.

Gemäß einer weiteren bevorzugten Ausgestaltung werden in einem Volllastbetrieb die erste Gruppe von Umrichtern und die zweite Gruppe von Umrichtern zur Erzeugung eines elektrischen Drehmoments in der elektrischen Maschine verwendet. Somit werden auch die Spulen, die von der zweiten Gruppe von Umrichtern bestromt werden, nicht mehr zur Erzeugung von Gegenschall eingesetzt, sondern bei einem Volllastbetrieb werden diese Spulen, genauso wie die Spulen der ersten Gruppe von Umrichtern, zum Betrieb der elektrischen Maschine eingesetzt, damit eine besonders hohe Leistung der elektrischen Maschine erreicht wird.

Vorteilhafterweise ist ein Teil der Umrichter innerhalb eines Maschinengehäuses angeordnet und ein Teil der Umrichter ist außerhalb des Maschinengehäuses angeordnet und die zweite Gruppe wird durch Umrichter außerhalb des Maschinengehäuses gebildet. Unter Maschinengehäuse wird hierbei ein Gehäuse der elektrischen Maschine verstanden, welche sowohl einen Läufer als auch den Stator umschließt. Die äußeren Umrichter sind dabei vorzugsweise möglichst nahe am Maschinengehäuse gelagert, insbesondere auf dem Maschinengehäuse. Die äußeren Umrichter sind insbesondere solche, die für den normalen Betrieb der elektrischen Maschine nicht erforderlich sind. Sie werden daher bevorzugt lediglich im Volllastmodus der elektrischen Maschine zu den inneren Umrichtern hinzu geschaltet oder sie werden im Hinblick auf einen besonders leisen Betrieb der elektrischen Maschine (z.B. Schleichfahrt eines von der elektrischen Maschine angetriebenen U-Boots) zur aktiven Schallkompensation eingesetzt.

In einer weiteren vorteilhaften Ausgestaltung sind nicht alle für den Betrieb der elektrischen Maschine benötigten Umrichter im Inneren des Läufers angeordnet, sondern eine Anzahl an Umrichtern ist außerhalb des Läufers, jedoch möglichst nahe an der elektrischen Maschine zu lagern. Hierbei wird bei einer ansteigenden Zahl an erforderlichen Umrichtern der Durchmesser der elektrischen Maschine, insbesondere der Durchmesser des Maschinengehäuses, nicht erhöht. Gleichzeitig ist durch die räumliche Nähe der weiteren Umrichter in Bezug auf den Motor keine aufwendige Führung von Leitungen in der Umgebung der elektrischen Maschine erforderlich. Dadurch, dass nur ein Teil der Umrichter ausgelagert ist, ist auch der Platzbedarf außerhalb des Gehäuses nicht sehr groß.

Gemäß einer bevorzugten Ausgestaltung sind die weiteren Umrichter an einer Außenseite des Maschinengehäuses angeordnet. Hierdurch wird gewährleistet, dass die Umrichter möglichst nahe an der elektrischen Maschine positioniert sind, insbesondere einen Bestandteil der elektrischen Maschine bilden, indem sie fest mit dem Maschinengehäuse verbunden sind. Ein weiterer Vorteil dieser Ausgestaltung ist, dass im Wesentlichen keine elektrischen Leitungen außerhalb der elektrischen Maschine geführt werden. Die weiteren Umrichter sind z.B. in einer Gruppe zusammengefasst, die insbesondere von einem Gehäuse umschlossen ist, damit ein störungsfreier Betrieb der Umrichter ermöglicht ist und zudem die Störstrahlung an das Umfeld besonders niedrig ist. Alternativ sind die weiteren Umrichter einzeln oder in mehreren Gruppen auf dem Maschinengehäuse verteilt.

Im Hinblick auf eine besonders platzsparende Lösung sind die weiteren Umrichter gemäß einer weiteren bevorzugten Ausgestaltung am Umfang des Maschinengehäuses angeordnet. Aufgrund einer guten Zugänglichkeit wird der äußere Umfang des Maschinengehäuses ohnehin zur Anbringung von Komponenten, die für den Betrieb der elektrischen Maschinen erforderlich sind, genutzt, z.B. für die Regelung und Steuerung der Umrichter, für ein Kühlsystem des Antriebs, für Sensorik, etc. Der vorhandene freie Platz am äußeren Umfang eignet sich somit bestens für die Aufnahme der weiteren Umrichter und bietet Flexibilität bei der Wahl der genauen Position der weiteren Umrichter, ohne dass dabei der Durchmesser des Maschinengehäuses vergrößert wird.

Vorteilhafterweise ist die Steuervorrichtung dafür eingerichtet, im Normalbetrieb oder in einem Teillastbetrieb lediglich einige der Umrichter zu betreiben. Mit Normalbetrieb wird hierbei jeder Zeitpunkt des Betriebes der elektrischen Maschine mit Ausnahme des An- und Abfahrens und der Wartung verstanden; unter Teillastbetrieb wird ein Betrieb mit reduzierter Leistung verstanden. Die Steuervorrichtung dient dabei zur Steuerung und/oder Regelung der Umrichter, die Steuervorrichtung kann jedoch auch andere Aufgaben im Zusammenhang mit dem Betrieb der elektrischen Maschine ausführen, z.B. die Verarbeitung von Sensordaten. Im Normalbetrieb oder im Teillastbetrieb werden nicht alle Umrichter benötigt, somit kann die Anzahl der eingeschalteten Umrichter auf ein erforderliches Minimum reduziert werden. Durch das Abschalten einiger der Umrichter werden die elektrischen Verluste minimiert, welche durch die für den Betrieb der elektrischen Maschine nicht benötigten Umrichter entstehen. Auf diese Weise verbessert sich der Wirkungsgrad der elektrischen Maschine.

Zweckdienlicherweise ist die Steuervorrichtung dafür eingerichtet, zuerst die Umrichter innerhalb des Maschinengehäuses zu betreiben. Dabei werden im Teillastbetrieb insbesondere lediglich ein Teil der Umrichter innerhalb des Maschinengehäuses betrieben und im Normalbetrieb werden insbesondere alle Umrichter innerhalb des Maschinengehäuses betrieben und erst in einem Volllastbetrieb werden die weiteren Umrichter, die sich außerhalb des Maschinengehäuses befinden, hinzugeschaltet. Unter Volllastbetrieb wird hierbei ein Betrieb mit der maximalen erreichbaren Leistung verstanden. Der Vorteil durch die Inbetriebnahme zuerst der innen liegenden Umrichter ist, dass die Störstrahlung, welche durch die Umrichter in ihrem Betrieb entsteht, durch das Maschinengehäuse abgeschirmt wird. Lediglich im Volllastbetrieb werden die äußeren Umrichter zusätzlich zu den inneren zugeschaltet, so dass zusätzliche Störstrahlung nur über einen kurzen Zeitraum produziert wird.

Ein Ausführungsbeispiel der Erfindung wird anhand einer Zeichnung näher erläutert. Hierin zeigen:
- FIG 1: eine beispielhafte elektrische Maschine, und
- FIG 2: ein erster Strom und ein zweiter Strom zur Gegentaktung des ersten Stroms.

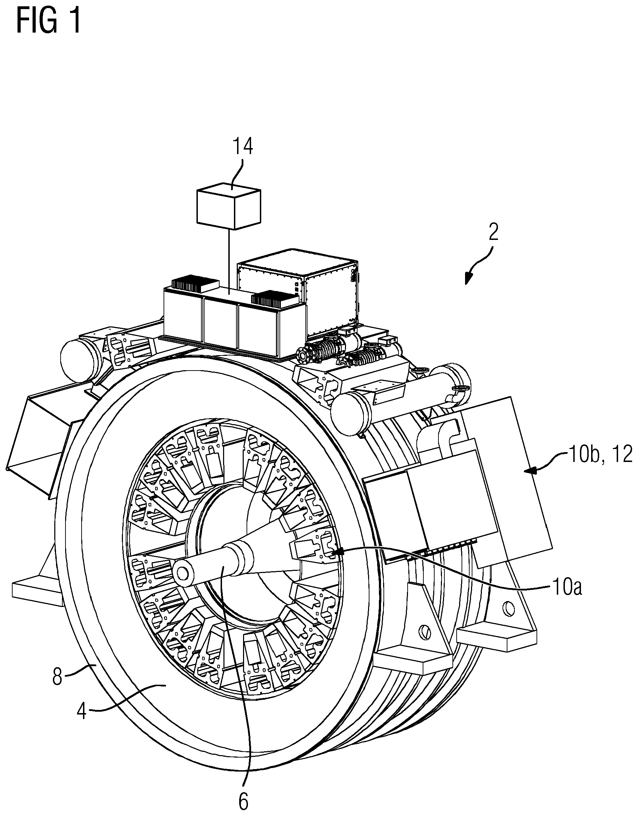

FIG 1 zeigt eine beispielhafte elektrische Maschine 2, insbesondere ein elektrischer Motor, der einen Läufer 4, der hierbei nach Art eines Glockenläufers ausgebildet ist, sowie einen hier nicht näher gezeigten Stator umfasst, der radial außerhalb des Glockenläufers angeordnet ist. Im weiteren Sinne ist mit dem Bezugszeichen 4 sowohl der Läufer als auch der Stator, die als eine Einheit dargestellt sind, gekennzeichnet. Der Läufer 4 und der Stator sind in einem Maschinengehäuse 8 untergebracht. In der Figur ist zudem eine Antriebswelle 6 des Läufers 4 gezeigt.

Im Inneren des Glockenläufers 4 sind mehrere Umrichter 10a angeordnet. Im gezeigten Ausführungsbeispiel sind sechszehn Umrichter 10a um den inneren Umfang des Glockenläufers 4 positioniert.

Darüber hinaus umfasst die elektrische Maschine 2 z.B. zwei oder vier weitere, hier nicht näher gezeigte Umrichter 10b, die in einem Gehäuse 12 auf dem äußeren Umfang des Maschinengehäuses 8 angeordnet sind. Das Gehäuse 12 enthält zudem passende Mittel zur Kühlung der Umrichter 10b.

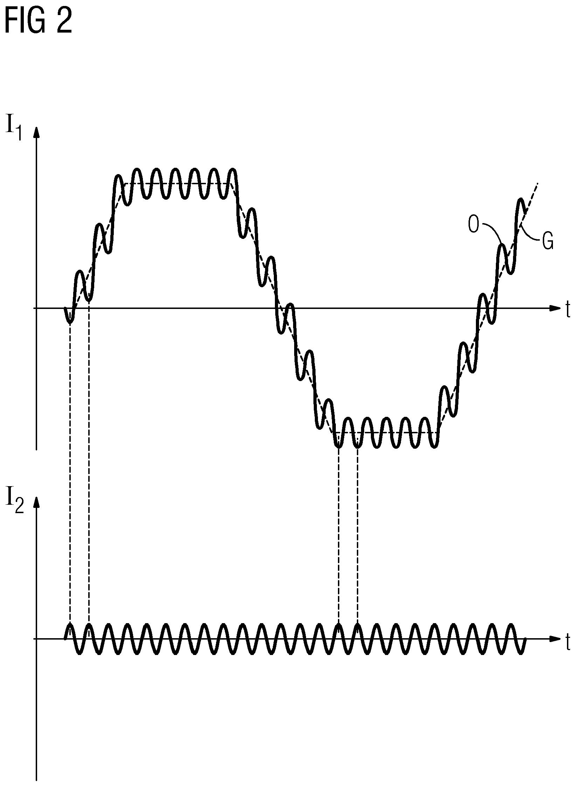

Die elektrische Maschine 2 weist zudem eine Steuervorrichtung 14 auf, welche symbolisch dargestellt ist. Die Steuervorrichtung 14 steuert bzw. regelt den Betrieb der elektrischen Maschine 2, u.a. wird durch die Steuervorrichtung 14 festgelegt, welche Umrichter 10a, 10b im Betrieb der elektrischen Maschine 2 eingeschaltet werden. Dabei ist vorgesehen, dass im Normalbetrieb oder im Teillastbetrieb der elektrischen Maschine 2 lediglich ein Teil der Umrichter 10a, 10b zur Drehmomenterzeugung betrieben wird. Insbesondere werden zunächst die Umrichter 10a innerhalb des Glockenläufers 4, die vom Maschinengehäuse 8 umschlossen sind, eingeschaltet und diese speisen in die entsprechenden Spulen einen ersten Strom I₁ ein, der eine insbesondere Grundschwingung G mit überlagerten, insbesondere Oberschwingungen O aufweist. Der erste Strom I₁ ist aus FIG 2 ersichtlich.

Dadurch, dass nur die Umrichter 10a in Betrieb sind, wird eine Störstrahlung durch die äußeren Umrichter 10b minimiert oder ganz vermieden. Die weiteren Umrichter 10b, die draußen auf dem Maschinengehäuse 8 platziert sind, werden insbesondere nur im Volllastbetrieb hinzugeschaltet.

Gemäß FIG 2 werden die weiteren Umrichter 10b im Rahmen einer aktiven Geräuschkompensation eingesetzt, damit sie in einige der Spulen Strom I₂ mit einer zu den Oberschwingungen O des ersten Stroms I₁ modifizierten, im gezeigten Ausführungsbeispiel invertierten Verlauf einspeisen. Der zweite Strom I₂ kann jedoch bezüglich z.B. seiner Amplitude vom ersten Strom I₂ abweichen.

Im vorliegenden Ausführungsbeispiel bilden die innenliegenden Umrichter eine erste Gruppe und die außenliegenden Umrichter eine zweite Gruppe von Umrichtern. Andere räumliche Verteilungen der Umrichter der ersten und der zweiten funktionellen Gruppen sind jedoch auch möglich.

Im Volllastbetrieb, wie bereits erläutert, erzeugen die Umrichter 10b der zweiten Gruppe Strom mit den gleichen Parametern wie der erste Strom I₁, wodurch sie ebenfalls zu Erzeugung eines Drehmoments in der elektrischen Maschine 2 eingesetzt werden.

Die beschriebene aktive Geräuschkompensation ist nicht auf die Anwendung von elektrischen Maschinen mit einem Glockenläufer und/oder externen Umrichtern beschränkt, sondern ist auf jede elektrische Maschine anwendbar, bei der die Spulen des Stators von zwei oder mehreren Umrichtern bestromt werden.

## Patentansprüche

1. Verfahren zum geräuscharmen Betrieb einer elektrischen Maschine (2), die insbesondere zum Antrieb von Fahrzeugen, insbesondere von U-Booten, vorgesehen ist,
umfassend einen Stator, der mehrere Spulen aufweist, sowie mehrere Umrichter (10a, 10b) zur Stromeinspeisung der Spulen, **dadurch gekennzeichnet, dass**
durch eine erste Gruppe von Umrichtern (10a) in die zugeordneten Spulen mit einem jeweiligen Phasenversatz ein erster Strom (I₁), der eine Grundschwingung (G) mit überlagerten Oberschwingungen (O) aufweist, eingespeist wird und gleichzeitig durch eine zweite Gruppe von Umrichtern (10b) in die zugeordneten Spulen ein zweiter, in Bezug auf die Oberschwingungen (O) des ersten Stroms (I₁) modifizierter invertierter Strom (I₂) eingespeist wird,
wobei durch den invertierten Stromverlauf eine aktive Geräuschkompensation generiert wird.

2. Verfahren nach Anspruch 1,
**dadurch gekennzeichnet, dass** der zweite, in Bezug auf die Oberschwingungen (O) des ersten Stroms (I₁) modifizierte invertierte, Strom (I₂) in einem Normalbetrieb oder einem Teillastbetrieb der elektrischen Maschine (2) erzeugt wird.

3. Verfahren nach Anspruch 1 oder 2,
**dadurch gekennzeichnet, dass** in einem Volllastbetrieb die erste Gruppe von Umrichtern (10a) und die zweite Gruppe von Umrichtern (10b) zur Erzeugung eines elektrischen Drehmoments in der elektrischen Maschine verwendet werden.

4. Verfahren nach einem der vorhergehenden Ansprüche,
**dadurch gekennzeichnet, dass** ein Teil der Umrichter (10a) innerhalb eines Maschinengehäuses (8) angeordnet ist und ein Teil der Umrichter (10b) außerhalb des Maschinengehäuses (8) angeordnet sind und die zweite Gruppe durch Umrichter (10b) außerhalb des Maschinengehäuses (8) gebildet wird.

5. Elektrische Maschine (2), die insbesondere zum Antrieb von Fahrzeugen, insbesondere von U-Booten vorgesehen ist, umfassend einen Stator, der mehrere Spulen aufweist, sowie mehrere Umrichter (10a, 10b) zur Stromeinspeisung der Spulen, **gekennzeichnet durch**
eine Steuervorrichtung (14), die dafür eingerichtet ist, eine erste Gruppe von Umrichtern (10a) zur Einspeisung in die zugeordneten Spulen mit einem jeweiligen Phasenversatz von einem ersten Strom (I₁), wobei der erste Strom (I₁) eine Grundschwingung (G) mit überlagerten Oberschwingungen (O) aufweist, zu betreiben und
gleichzeitig eine zweite Gruppe von Umrichtern (10b) zur Einspeisung von einem zweiten, in Bezug auf die Oberschwingungen (O) des ersten Stroms (I₁) modifizierten invertierten Strom (I₂) in die zugeordneten Spulen zu betreiben, wobei der invertierte Stromverlauf zur Generierung einer aktiven Geräuschkompensation vorgesehen ist.

6. Elektrische Maschine nach Anspruch 5,
**dadurch gekennzeichnet, dass** die Steuervorrichtung (14) dafür ausgebildet ist, den zweiten, in Bezug auf die Oberschwingungen (O) des ersten Stroms (I₁) modifizierten invertierten, Strom (I₂) in einem Normalbetrieb oder einem Teillastbetrieb der elektrischen Maschine (2) zu erzeugen.

7. Elektrische Maschine (2) nach Anspruch 5 oder 6,
**dadurch gekennzeichnet, dass** die Steuervorrichtung (14) dafür eingerichtet ist, in einem Volllastbetrieb die erste Gruppe von Umrichtern (10a) und die zweite Gruppe von Umrichtern (10b) zur Erzeugung eines elektrischen Drehmoments in der elektrischen Maschine (2) zu betreiben.

8. Elektrische Maschine (2) nach einem der Ansprüche 5 bis 7, **dadurch gekennzeichnet, dass** ein Teil der Umrichter (10a) innerhalb eines Maschinengehäuses (8) und ein Teil der Umrichter (10b) außerhalb des Maschinengehäuses (8) angeordnet sind und Umrichter (10b) außerhalb des Maschinengehäuses (8) die zweite Gruppe bilden.

9. Fahrzeug, insbesondere ein U-Boot, mit einer elektrischen Maschine (2) nach einem der Ansprüche 5 bis 8.

## Claims

1. Method for the low-noise operation of an electrical machine (2), which is provided especially for driving vehicles, in particular submarines, comprising a stator, which has a number of coils, and a number of converters (10a, 10b) for supplying current to the coils,
**characterised in that** a first current (I₁), which has a fundamental oscillation (G) with superimposed harmonic components (O) is supplied to the assigned coils with a respective phase offset by means of a first group of converters (10a), and at the same time a second inverted current (I₂) which is modified with respect to the harmonic components (O) of the first current (I₁) is supplied to the assigned coils by means of a second group of converters (10b), wherein an active noise compensation is generated by means of the inverted flow of current.

2. Method according to claim 1,
**characterised in that** the second inverted current (I₂) which is modified with respect to the harmonic components (O) of the first current (I₁) is generated during normal operation or a partial load operation of the electrical machine (2).

3. Method according to claim 1 or 2,
**characterised in that** in a full load operation the first group of converters (10a) and the second group of converters (10b) are used to generate an electrical torque in the electrical machine.

4. Method according to one of the preceding claims,
**characterised in that** one part of the converters (10a) is arranged within a machine housing (8) and one part of the converters (10b) is arranged outside of the machine housing (8) and the second group is formed by converters (10b) outside of the machine housing (8).

5. Electrical machine (2), which is provided especially for driving vehicles, in particular submarines, comprising a stator, which has a number of coils, and a number of converters (10a, 10b) for supplying current to the coils, **characterised by** a control apparatus (14), which is designed to operate a first group of converters (10a) for supplying a first current (I₁) into the assigned coils with a respective phase offset, wherein the first current (I₁) has a fundamental oscillation (G) with superimposed harmonic components (O) and at the same time to operate a second group of converters (10b) for supplying a second inverted current (I₂) which is modified with respect to the harmonic components (O) of the first current (I₁) to the assigned coils, wherein the inverted flow of current is provided to generate an active noise compensation.

6. Electrical machine according to claim 5,
**characterised in that** the control apparatus (14) is embodied to generate the second inverted current (I₂) which is modified with respect to the harmonic components (O) of the first current (I₁) during normal operation or a partial load operation of the electrical machine (2).

7. Electrical machine (2) according to claim 5 or 6,
**characterised in that** the control apparatus (14) is designed, in a full load operation to operate the first group of converters (10a) and the second group of converters (10b) to generate an electrical torque in the electrical machine (2).

8. Electrical machine (2) according to one of claims 5 to 7, **characterised in that** one part of the converters (10a) is arranged within a machine housing (8) and one part of the converters (10b) is arranged outside of the machine housing (8) and converters (10b) outside of the machine housing (8) form the second group.

9. Vehicle, in particular a submarine, having an electrical machine (2) according to one of claims 5 to 8.

## Revendications

1. Procédé pour faire fonctionner avec peu de bruit une machine (2) électrique, prévue notamment pour propulser des véhicules, notamment des sous-marins,
comprenant un stator, qui a plusieurs bobines, ainsi que plusieurs convertisseurs (10a, 10b) d'alimentation en courant des bobines,
**caractérisé en ce que**
on injecte, par un premier groupe de convertisseurs (10a) dans les bobines associées avec un déphasage respectif, un premier courant (I₁), qui a une oscillation (G) fondamentale avec des harmoniques (O) superposées et, en même temps, on injecte par un deuxième groupe de convertisseurs (10b) dans les bobines associées un deuxième courant (I₂) inversé modifié en ce qui concerne les harmoniques (O) du premier courant (I₁),
dans lequel on produit, par la courbe de courant inversé, une compensation active du bruit.

2. Procédé suivant la revendication 1,
**caractérisé en ce que** l'on produit le deuxième courant (I₂) inversé et modifié en ce qui concerne les harmoniques (O) du premier courant (I₁) dans un fonctionnement normal ou dans un fonctionnement en charge partielle de la machine (2) électrique.

3. Procédé suivant la revendication 1 ou 2,
**caractérisé en ce que**, dans un fonctionnement en pleine charge, on utilise le premier groupe de convertisseurs (10a) et le deuxième groupe de convertisseurs (10b) pour produire un couple de rotation électrique dans la machine électrique.

4. Procédé suivant l'une des revendications précédentes, **caractérisé en ce qu'**une partie des convertisseurs (10a) est disposée à l'intérieur d'une carcasse (8) de la machine et une partie des convertisseurs (10b) est disposée à l'extérieur de la carcasse (8) de la machine et on forme le deuxième groupe par des convertisseurs (10b) à l'extérieur de la carcasse (8).

5. Machine (2) électrique prévue notamment pour propulser des véhicules, notamment des sous-marins,
comprenant un stator, qui a plusieurs bobines, ainsi que plusieurs convertisseurs (10a, 10b) d'alimentation en courant des bobines,
**caractérisée par**
un système (14) de commande conçu pour faire fonctionner un premier groupe de convertisseurs (10a) pour injecter un premier courant (I₁) dans les bobines associées avec un déphasage respectif, le premier courant (I₁) ayant une oscillation (G) fondamentale avec des harmoniques (O) superposées, et
en même temps, pour faire fonctionner un deuxième groupe de convertisseurs (10b) pour injecter un deuxième courant (I₂) inversé modifié en ce qui concerne les harmoniques (O) du premier courant (I₁) dans les bobines associées, la courbe de courant inversé étant prévue pour produire une compensation active du bruit.

6. Machine électrique suivant la revendication 5,
**caractérisée en ce que** le système (14) de commande est constitué pour produire le deuxième courant (I₂) inversé modifié en ce qui concerne les harmoniques (O) du premier courant (I₁) dans un fonctionnement normal ou dans un fonctionnement en charge partielle de la machine (2) électrique.

7. Machine (2) électrique suivant la revendication 5 ou 6, **caractérisée en ce que** le système (14) de commande est prévu pour faire fonctionner, dans un fonctionnement en pleine charge, le premier groupe de convertisseurs (10a) et le deuxième groupe de convertisseurs (10b) pour produire un couple de rotation électrique dans la machine (2) électrique.

8. Machine (2) électrique suivant l'une des revendications 5 à 7,
**caractérisée en ce qu'**une partie des convertisseurs (10a) est disposée à l'intérieur d'une carcasse (8) de la machine et une partie des convertisseurs (10b) est disposée à l'extérieur de la carcasse (8) de la machine et des convertisseurs (10b) à l'extérieur de la carcasse (8)) forment le deuxième groupe.

9. Véhicule, notamment sous-marin, comprenant une machine (2) électrique suivant l'une des revendications 5 à 8.
